# EUROPEAN PATENT APPLICATION

(11) **EP 1 030 480 A2**
(43) Date of publication of application: **23.08.2000**
(21) Application number: 00810130.5
(22) Date of filing: 16.02.2000
(51) Int. Cl.: H04J 14/02, G02B 6/34

(54) **Configurable optical circuit**

(30) Priority: 19.02.1999 CA 262291; 20.04.1999 US 294912
(71) Applicant: JDS Uniphase Inc., Nepean, Ontario K2G 5W8 (CA)
(72) Inventor: Keyworth, Barrie, Sittsville, Ontario K2S 1M2 (CA)
(74) Representative: Frei, Alexandra Sarah

(57) **Abstract**

A configurable add/drop optical system is disclosed for demulitplexing, adding and/or dropping closely spaced channels carrying optically encoded data. A composite optical signal having data channels corresponding to centre wavelengths λ1, λ2, λ3, λ4, ... λn are separated into two composite optical signals of first of which comprises data channels corresponding to centre wavelengths λ1, λ3, ... λn and a second which comprises data channels corresponding to centre wavelengths λ2, λ4, ... λn-1, by passing the composite signal through an interleaver circuit in a demultiplexing mode of operation. Two such interleaver circuits are optically coupled to one another and controllable, tunable Bragg gratings disposed therebetween are used to route demultiplexed signals along preferred signal paths.

## Description

### Field of the Invention

This invention relates generally to the field of demultiplexing and more particularly relates to a configurable optical circuit for directing and/or multiplexing and/or demultiplexing optical signals to particular locations.

### Background of the Invention

Using optical signals as a means of carrying channeled information at high speeds through an optical path such as an optical waveguide i.e. optical fibres, is preferable over other schemes such as those using microwave links, coaxial cables, and twisted copper wires, since in the former, propagation loss is lower, and optical systems are immune to Electro-Magnetic Interference (EMI), and have higher channel capacities. High-speed optical systems have signaling rates of several mega-bits per second to several tens of giga-bits per second.

Optical communication systems are nearly ubiquitous in communication networks. The expression herein "Optical communication system" relates to any system that uses optical signals at any wavelength to convey information between two points through any optical path. Optical communication systems are described for example, in Gower, Ed. Optical communication Systems, (Prentice Hall, NY) 1993, and by P.E. Green, Jr in "Fiber optic networks" (Prentice Hall New Jersey) 1993, which are incorporated herein by reference.

As communication capacity is further increased to transmit an ever-increasing amount of information on optical fibres, data transmission rates increase and available bandwidth becomes a scarce resource.

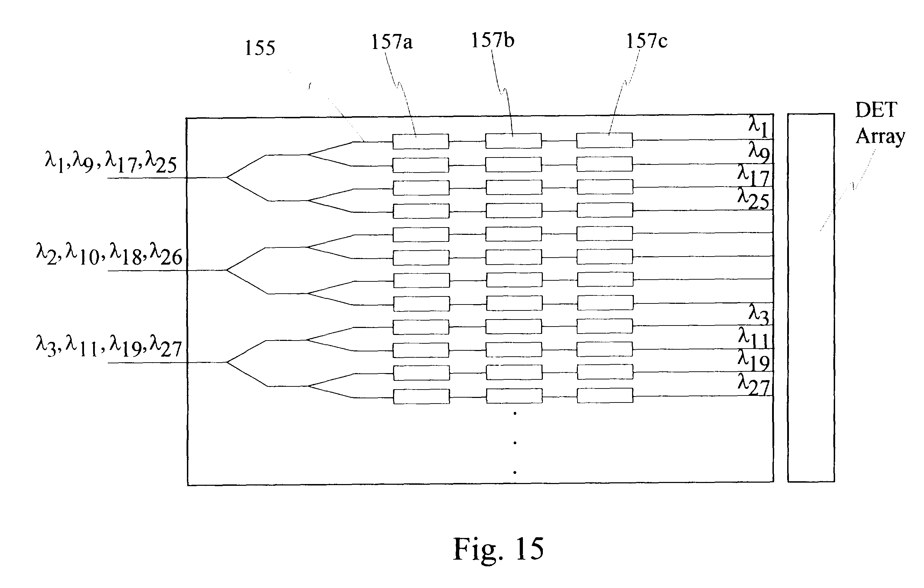

High speed data signals are plural signals that are formed by the aggregation (or multiplexing) of several data streams to share a transmission medium for transmitting data to a distant location. Wavelength Division Multiplexing (WDM) is commonly used in optical communications systems as means to more efficiently use available resources. In WDM each high-speed data channel transmits its information at a pre-allocated wavelength on a single optical waveguide. At a receiver end, channels of different wavelengths are generally separated by narrow band filters and then detected or used for further processing. In practice, the number of channels that can be carried by a single optical waveguide in a WDM system is limited by crosstalk, narrow operating bandwidth of optical amplifiers and/or optical fiber non-linearities. Moreover such systems require an accurate band selection, stable tunable lasers or filters, and spectral purity that increase the cost of WDM systems and add to their complexity. This invention relates to a method and system for filtering or separating closely spaced channels that would otherwise not be suitably filtered by conventional optical filters. A significant part of this invention relates to a system wherein an optical system can be dynamically configured and controlled to route optical signals to particular destinations. In one aspect of the invention a configurable add/drop circuit is provided which allows inexpensive, "sloppy" filters having poor slopes and responses to be used by first demultplexing closely spaced wavelengths corresponding to adjacent optical channels by the use of a de-interlever filter for example such the one described in U.S. Patent application number 08/864,895 assigned to the same assignee. This invention is not limited to de-interleavers which de-interleave or interleave every alternate channel into two data streams, but includes de-interleavers/interleaver which demultiplex into several streams of further spaced channels, as for example, shown in Fig. 15.

Currently, internationally agreed upon channel spacing for high-speed optical transmission systems, is 100 Ghz, equivalent to 0.8 nm spacing between centre wavelengths of adjacent channels, surpassing, for example 200 Ghz channel spacing equivalent to 1.6 nanometers between centre wavelengths between adjacent channels.

Of course, as the separation in wavelength between adjacent channels decreases, the requirement and demand for more precise demultiplexing circuitry capable of ultra-narrow-band filtering, absent crosstalk, increases. With the available technology of today, the use of conventional dichroic filters to separate channels spaced by 0.4 nm or less without crosstalk, is not practicable; such filters being difficult if not impossible to manufacture.

It is an object of one aspect of this invention to utilize a circuit for separating an optical signal having closely spaced channels into at least two optical signals wherein channel spacing between adjacent channels is greater in each of the at least two optical signals, thereby requiring less precise filters to demultiplex channels carried by each of the at least two signals. It is a further object of this invention to provide a dynamically configurable add/drop circuit for adding or dropping demultiplexed data channels.

### Summary of the Invention

In accordance with this invention a new, enabling, de-interleaving/interleaving technology that can be integrated with known DWDM components is provided, yielding a very high performance modular device having narrow channel spacing and high channel count. These new combined devices in accordance with this invention exhibit excellent performance characteristics including low loss, low crosstalk, high isolation, uniform channel response and superior channel accuracy with reduced temperature sensitivity. The device in accordance with this invention can be applied directly to established systems to increase the channel count and allow the use of reduced channel spacing.

In accordance with this invention, a configurable optical system is provided comprising:
a first de-interleaver/interleaver demultiplexing /multiplexing circuit, having at least an input port for receiving an optical signal having a plurality of multiplexed channels of light, and having a plurality of output ports for receiving demultiplexed channels of light;
a second de-interleaver/interleaver multiplexing/demultiplexing circuit optically coupled with the first interleaver demultiplexing /multiplexing circuit and having a plurality of light receiving ports and at least an output port for receiving a multiplexed optical signal, and;
a controller for dynamically controlling the direction of at least one wavelength band of light propagating between the first and second de-interleaver/interleaver circuits in dependence upon at least a control signal.

In accordance with another aspect of the invention, a configurable optical system is provided comprising:
a first de-interleaver/interleaver demultiplexing /multiplexing circuit, having at least an input port for receiving an optical signal having a plurality of multiplexed channels of light, and having a plurality of output ports for receiving demultiplexed channels of light;
a second de-interleaver/interleaver multiplexing/demultiplexing circuit optically coupled with the first interleaver demultiplexing /multiplexing circuit and having a plurality of light receiving ports and at least an output port for receiving a multiplexed optical signal, and;
direction control circuitry for directing at least one wavelength band of light propagating between the first and second interleaver circuits in dependence upon at least a control signal.

In accordance with another aspect of the invention there is provided, an integrated reconfigurable add and / or drop optical system comprising:
a first integrated waveguide block having integrated waveguides therein, said first block for providing a plurality of de-interleaved channels at a plurality of ports;
a second integrated waveguide block optically coupled with the plurality of ports of the first integrated waveguide block, the second block having a plurality of tunable gratings therein for directing particular channels towards an output port or towards a drop port;
a third integrated waveguide block having integrated waveguides therein, said third block for receiving at least some of the de-interleaved channels and for interleaving and directing said channels to the output port.

### Brief Description of the Drawings

Exemplary embodiments of the invention will now be described in conjunction with the drawings, in which:
Fig. 1 is a graph of an output response for two dichroic multi-layer filters centered at two wavelengths in a 200 Ghz system;
Fig. 2 is a circuit block diagram of an interleaver circuit used in an aspect of this invention;
Fig. 3 is a graph of an output response for a single etalon showing transmission and reflection versus wavelength;
Fig. 3a is a diagram of the etalon depicted in Fig. 3;
Fig. 4 is a graph of an output response for a single etalon showing transmission and reflection versus wavelength;
Fig. 4a is a diagram of the etalon depicted in Fig. 4;
Fig. 5 is a graph of an output response for a single etalon showing transmission and reflection versus wavelength;
Fig. 5a is a diagram of the etalon depicted in Fig. 5;
Fig. 6 is a graph of an output response for a single etalon showing transmission and reflection versus wavelength;
Fig. 6a is a diagram of the etalon depicted in Fig. 6;
Fig. 7 is a graph of an output response for a single etalon showing transmission and reflection versus wavelength;
Fig. 7a is a diagram of the etalon depicted in Fig. 7;
Figs 7b and 7c are more detailed diagrams of the devices used in accordance with an aspect of this invention;
Fig. 8 is an optical circuit diagram of a sub-system for demultiplexing one high density channelized optical signal into two less dense optical signals;
Fig. 9 is an optical circuit diagram of a system used in accordance with an aspect of this invention;
Fig. 10 is an optical circuit diagram of a system used in accordance with an aspect of this invention;
Fig. 11a is an optical circuit diagram of a system used in accordance with an aspect of this invention;
Fig. 11b is an optical circuit diagram of a system used in accordance with an aspect of this invention;
Fig. 12 is a circuit block diagram of a configurable optical circuit in accordance with this invention;
Fig. 13 is schematic block diagram of a portion of the circuit shown in Fig. 12 including a a control circuit block;
Fig. 14 is an optical circuit diagram of an alternative embodiment of a portion of the circuit shown in Fig. 12, in accordance with this invention;
Fig. 15 is a block circuit diagram of a waveguide chip for monitoring wavelengths in accordance with this invention;
Fig. 16 is a block diagram showing four waveguide chips in accordance with an aspect of the invention;
Figs 17a and 17b are optical circuit diagrams depicting a first and second circuit respectively for demultiplexing wavelengths, the preferred circuit being the second circuit; and,
Fig. 18 is a schematic diagram of a system similar to the one shown in Fig. 12.

### Detailed Description

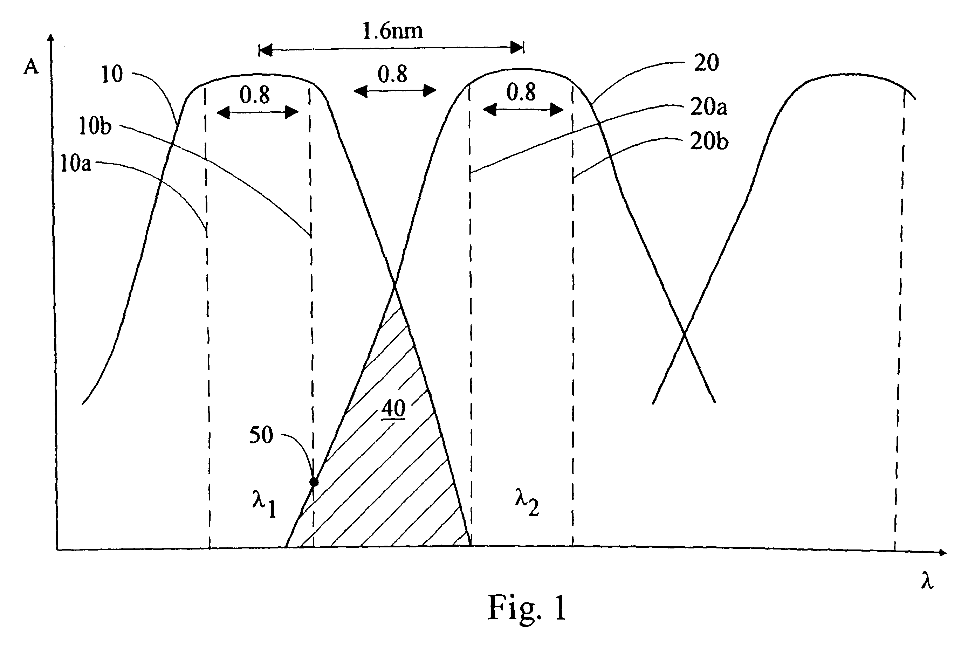

Referring now to Fig. 1, wavelength responses 10 and 20 for two filters designed to pass two adjacent channels centered at λ1 and λ2 respectively, are shown. The filters are designed to operate with a 200 Ghz optical system, wherein the distance between center wavelengths of adjacent channels is 1.6 nm. The filter's responses 10 and 20 are shown to have boundaries indicated by dashed lines within which each laser providing a data signal for each channel may operate. Thus, for example, a laser that operates to provide the optical data signal of channel 1, corresponding to filter response 10, must operate between wavelengths corresponding to lines 10a and 10b, and in a same manner the laser that provides the optical signal for channel 2, must operate to provide an optical data signal that has a wavelength that is between the dashed lines 20a and 20b.

In order for the optical system to operate so that the integrity of the data is preserved, crosstalk between adjacent channels must be minimized and must at least be below a predetermined allowable maximum level (-20 dB). In Fig. 1, the response of filter 20 is shown to overlap with the response of filter 10, the overlap region indicated by the cross-hatched triangular region 40. Furthermore, the dashed line 10b is shown to intersect the sloped line indicating the response of the filter 10, at a point 50. Thus, if the distance (or channel spacing) between dashed lines 10b and 20a was lessened, i.e. in order to have a more dense communication system by increasing the number of total channels for a given bandwidth, cross talk between adjacent channels would exceed allowable maximum level (-20 dB) using the filters shown.

When 100 Ghz channel spacing equivalent to 0.8 nm is implemented, the filters depicted by the output responses 10 and 20 do not adequately separate channels 1 and 2 and high levels of crosstalk adversely affect data retrieval. In this instance, conventional dichroic filters as shown in Fig. 1, would not suffice and crosstalk would exceed allowable maximum levels.

One aspect of this invention utilizes an optical circuit for first demultiplexing a channeled optical signal, that is, a signal comprising multiplexed closely spaced channels, into a plurality of less-dense channeled signals each comprising a plurality of multiplexed less closely spaced channels. In a first direction wherein the circuit performs a multiplexing function on a plurality of channels launched into a first end of the circuit, it is an interleaver circuit, and in an opposite direction wherein the circuit performs a demultiplexing function on a composite signal launched therein at an opposite end to provide a plurality of demultiplexed channels it serves as a de-interleaver circuit. However, the term interleaver circuit shall be used hereafter to denote this interleaver/de-interleaver circuit. One such interleaver circuit is disclosed as a comb splitting filter in U.S. Patent No. 5,680,490 in the name of Cohen.

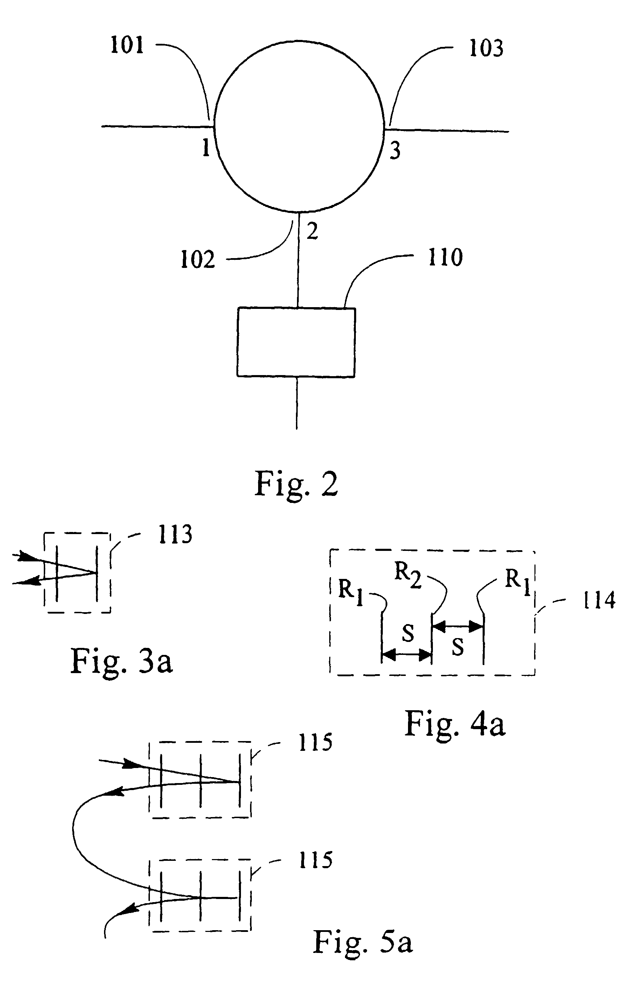

Referring now to Fig. 2, an optical interleaver circuit is shown including a 3-port optical circulator having an input port 101, its second port 102 coupled with a Fabry-Perôt etalon filter 110, and a third port 103 serving as an output port. The Fabry-Perôt etalon filter 110 has two partially reflective mirrors, or surfaces, facing each other and separated by a certain fixed gap which forms a resonant optical cavity.

In general, the spectral characteristics of an etalon filter are determined by the reflectivity of the mirrors or reflective surfaces and the length of the gap or space between the mirrors or reflective surfaces. The Fabry-Perôt principle allows a wideband optical beam to be filtered whereby only periodic spectral passbands are substantially transmitted out of the filter. Conversely, if the reflectivity of the mirrors or reflective surfaces are selected appropriately, periodic spectral passbands shifted by d nanometers are substantially reflected backwards from the input mirror surface. In adjustable Fabry-Perôt devices, such as one disclosed in United States Patent number 5,283,845 in the name of Ip, assigned to JDS Fitel Inc., tuning of the center wavelength of the spectral passband is achieved typically by varying the effective cavity length (spacing).

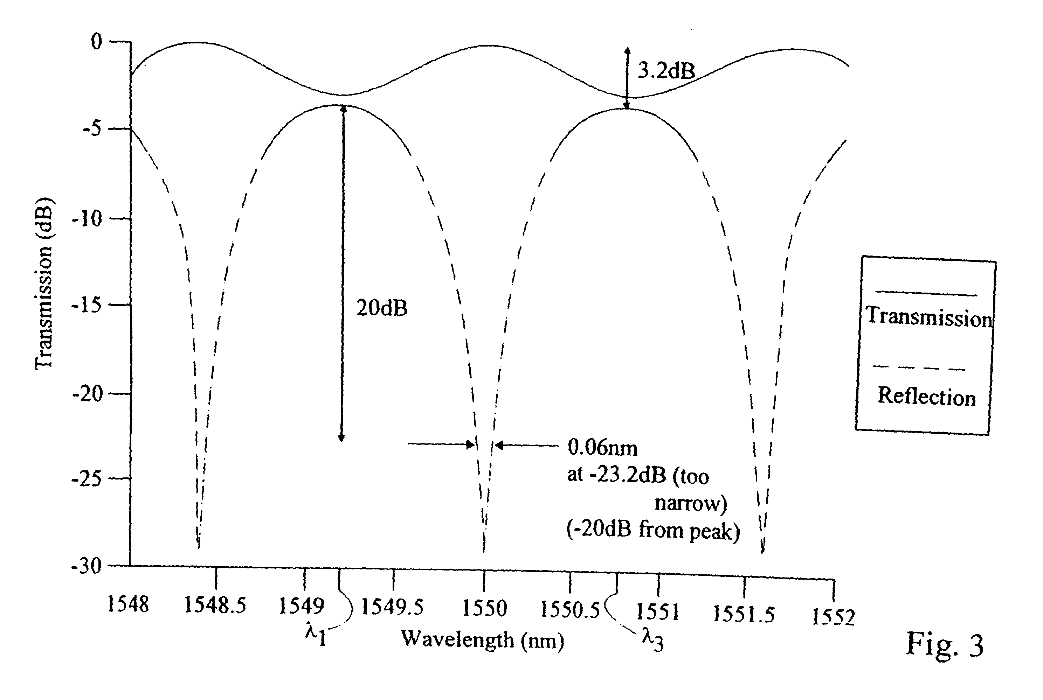

Referring now to Figs. 3, 4, 5, 6, 7, and 3a, 4a, 5a, 6a, and 7a output response curves of five different Fabry-Perôt etalon devices 113, 114, 115, 116, and 117 are shown and described, in order of their performance, from least to most optimal. Fig. 3 shows an output response curve for a 2-mirror etalon having an FSR of 1.6 nm and a finesse of 1.5. A first curve shown as a solid line is a periodic transmission response in dBs for the single etalon 113 to input light ranging in wavelength from 1548 nm to 1552 nm. The second group of curves in the same figure, shown as dotted lines, depict the reflection response of same etalon 113 within the same wavelength range. It is noted that at the wavelengths λ1 ∼1549.2 nm and λ3 ∼ 1550.85 nm the intensity of the reflected light from the input light launched into the etalon is attenuated by approximately ∼3dB. It is further noted that at the wavelengths λ2 ∼ 1550 nm and λ4∼1551.6 nm, essentially all of the input light launched into the etalon is transmitted through the 2 mirrors to the output port of the etalon 113. Since the etalon is to be used to pass and reflect adjacent channels having a 0.4 nm bandwidth, it is preferred that the response of the etalon, in this instance, at the wavelengths λ2 and λ4, have a window of at least 0.4 nm where reflection does not exceed about - 25 dB. Stated in more general terms, it is preferred that at wavelengths λ1 and λ3 most of the light incident upon the input port of the etalon is reflected backwards, and that most of the light at wavelengths λ2 and λ4 be transmitted through the etalon. However, as can be seen from the graph of Fig. 3, the transmission window at λ2 or 1550 nm, is only 0.06 nm wide at -23 dB. At wavelengths λ1 and λ3, and within a 0.4 nm window, approximately half or more of the input light launched into the etalon is reflected indicated by the response curve at 3.2dB. The periodicity of the etalon allows multiple wavelengths of light to be routed through the device and multiple other adjacent wavelengths to be reflected backwards, thereby separating the multiplexed channelized input light signal into two less dense optical signals.

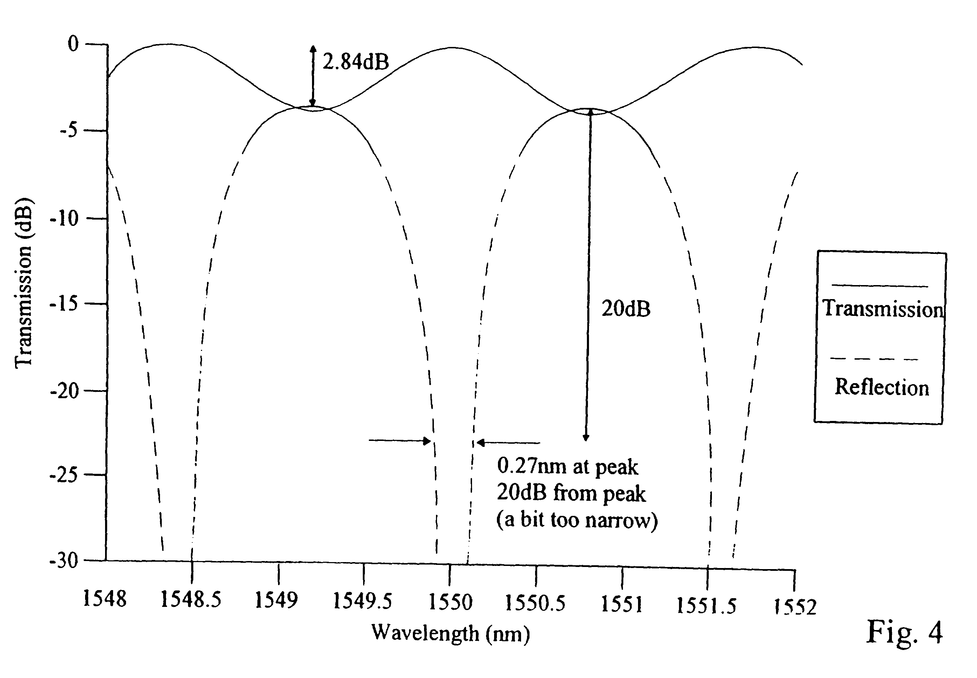

Referring now to Fig. 4, a response curve for a 3-mirror two-cavity etalon 114 is shown having an FSR of 1.6 nm and a reflectivity of R1=0.05 where R2=4R1/(1+R1)². The mirrors are arranged such that the mirror having a reflectivity R2 is sandwiched between and spaced a distance d from outer mirrors having a reflectivity R1. It is noted by the response curves for this device that at wavelengths λ1 and λ3, reflection is at -2.84 dB thereby indicating less attenuation of channels at these wavelengths than for the etalon 113. Furthermore, the transmission window at -23 dB for channels corresponding to wavelengths λ2 and λ3 is 0.27 nm, again an improvement over the response of single cavity etalon 113. Notwithstanding, the etalon 114 does not provide enough isolation between adjacent channels.

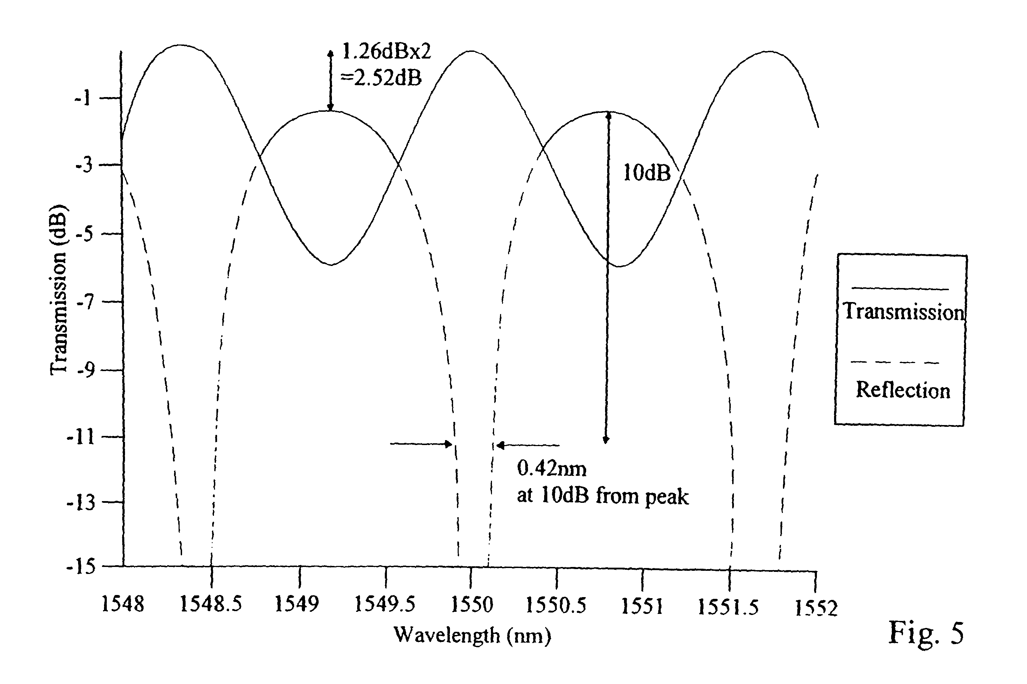

In Fig. 5, a response curve for 2 3-mirror two-cavity etalons 115 is shown in reflection mode; each etalon has an FSR of 1.6 nm and a reflectivity of R1=0.1. In this configuration light is launched into a first etalon 115 and a signal reflected from the first etalon 115 is reflected again from the second etalon 115. The window is approximately .42 nm for each etalon at 10 dB from the peak for channels corresponding to wavelengths λ2 and λ4, thus providing a window of approximately 0.42 nm for rejection of λ2 and λ4 from the reflected signal for the double pass.

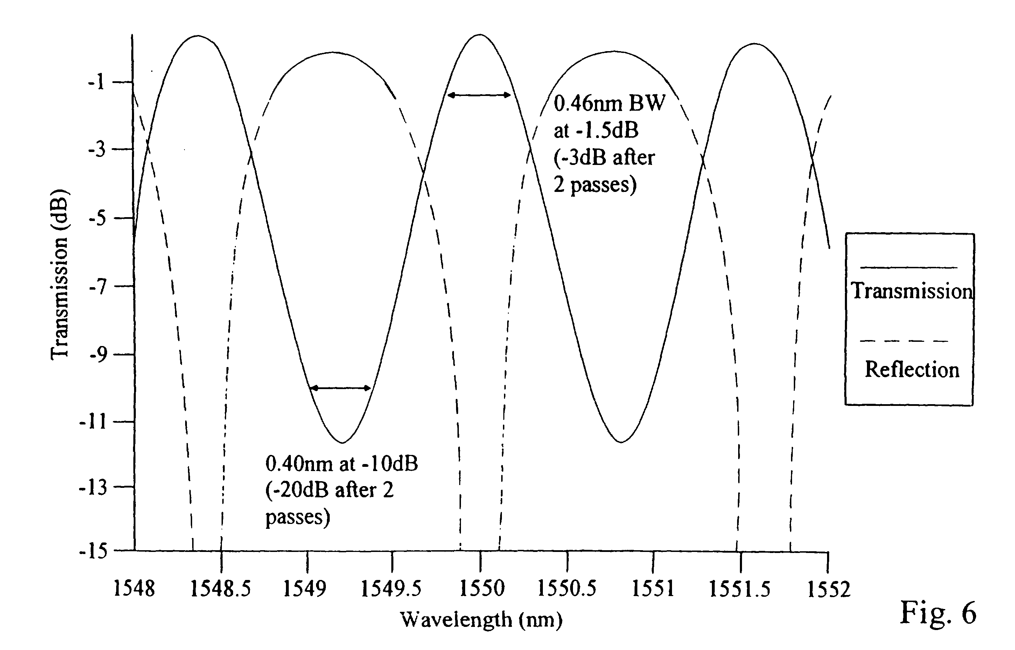

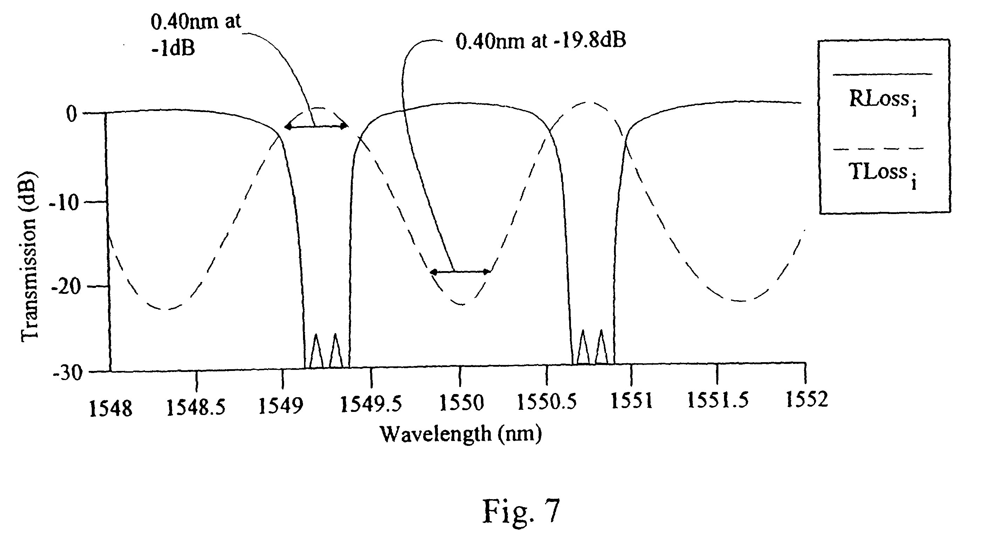

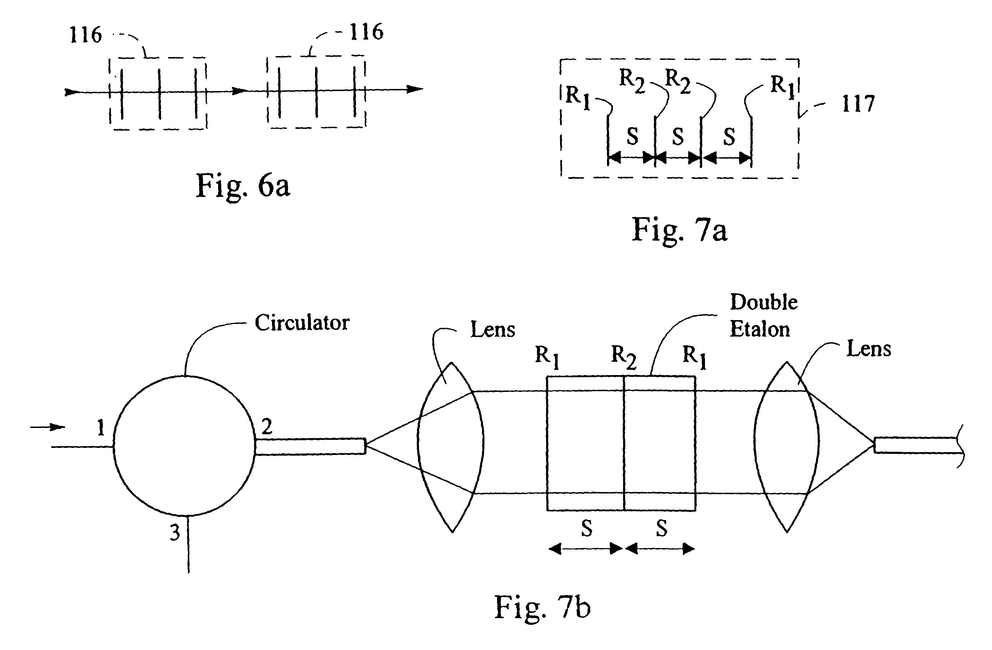

Fig. 6 shows a response curve for a 2-pass transmission system having two double-cavity etalons with R1=0.21. In this instance channels corresponding to wavelengths λ1 and λ3 are substantially blocked within a 0.4 nm window for each etalon 116 and nearly 100 percent transmission is provided for wavelengths λ2 and λ4, with acceptable levels of crosstalk from adjacent channels 1 and 3 substantially blocked, corresponding to (reflected) wavelengths λ1 and λ3. For this configuration care must be taken to avoid multiple reflections between the two etalons 116, which would degrade the performance. This can be accomplished by passing the optical beam through 166 at a small angle, or by placing an optical isolator between the two etalons 116.

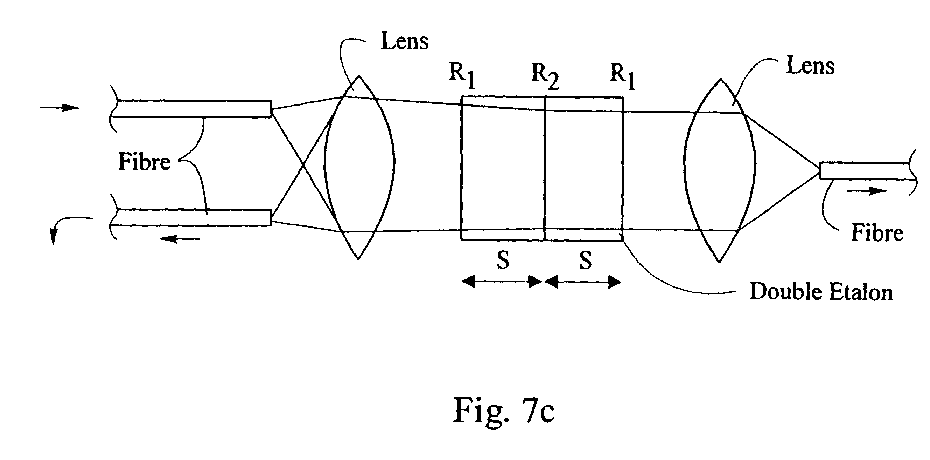

Turning now to Fig. 7 the response curves for an etalon 117 having 4 mirrors, wherein R1=0.2 and R2=0.656 spaced from each other by a distance s. In this embodiment having multi-cavity etalons defined by a 4-mirror configuration wherein R1=0.2, and R2=0.656, the response is yet improved over the previous etalon designs. In this instance, and as can be seen with reference to Fig. 7. Channels λ1 and λ3 are substantially blocked over a range of approximately 0.40 nm at -19.8 dB, and there is a transmission window of approximately 0.40 nm at -1dB for channels λ2 and λ4. In reflection, channels λ1 and λ3 are almost completely reflected, and λ2 and λ4 are largely absent from the reflected signal, although additional filtering may be necessary to remove remaining levels of λ2 and λ4 from the reflected signal.

By providing multi-cavity etalon structures, the response is considerably improved over that of a single cavity etalon.

By using a device having a periodic response, such as the etalon 116 or 117, channels 1, 3, 5, ...corresponding to wavelengths of light λ1, λ3, λ5, ... are substantially separated from adjacent closely spaced channels 2, 4, 6, ....corresponding to wavelengths of light λ2, λ4, λ6, ... the latter corresponding to wavelengths or channels transmitted through the device, and the former corresponding to wavelengths or channels reflected from etalon backwards to the input port end of the device and into a waveguide attached thereto. The optical circuit shown in Fig. 2 shows an optical circulator as a means of coupling an optical signal having closely spaced channels into and out of a Fabry-Perôt etalon, however, other coupling means may be envisaged such as a 50/50 splitter, or separate fibers for input signals and reflected output signals. Essentially the means must allow light to be launched into the etalon, and for the light to be ported out of the etalon at its input port end via reflections backwards, or ported out of the etalon at its output port end via transmission through the etalon. Although the circuit in accordance with this invention is well suited to separating alternate channels from a sequence of closely spaced channels, into two optical signals for further filtering and processing, the circuit is also suited to separating any plurality of channels that are spaced by a predetermined distance or multiple thereof. For example in a system where sequentially spaced channels spaced by a distance from one another by 0.8 nm and wherein wavelengths of light λ1, λ2, λ5,λ6,λ7 are multiplexed into a single optical signal corresponding to channels 1,2,5,6, and 7, wavelengths λ1,λ3, λ5 and λ7 are separated into a first optical signal, and a second optical signal comprises wavelengths λ2 , λ4 and λ6 after being launched into the etalon 110, having a free spectral range of 1.6 nm. Since a portion of channels 1, 3, 5, and 7 are passed through the etalon with channels 2, 4, 6 and 8, further processing will be required to demultiplxed channels 2, 4, 6, and 8.

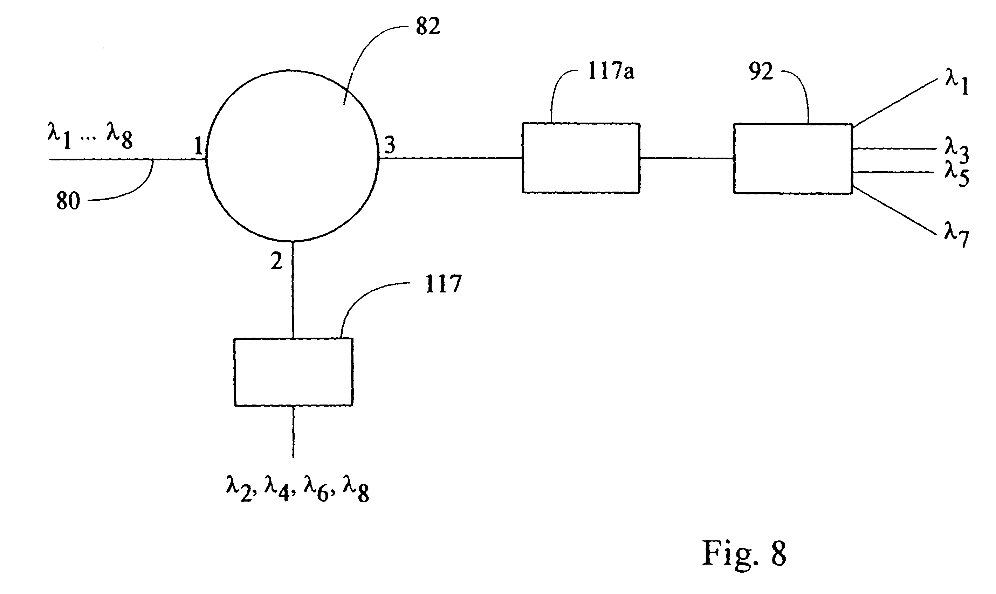

Turning now to Fig. 8 in conjunction with the etalon shown in Fig. 3 or Fig. 4, a sub-system is shown, for demultiplexing a composite optical signal carrying channels 1, 2, 3, 4, ... 8 into a first signal carrying channels 1, 3, 5, 7 and a second signal carrying channels 2, 4, 6, and 8. This sub-system may be a part of larger communications system. By way of example, and for the purpose of this description, the etalons for use in this system are those shown and described in Fig. 7. At a first end of the sub-system is an optical fibre 80 carrying the composite optical signal. An output end of the optical fibre 80 is coupled to an input port 1 of an optical circulator 82. Coupled to a next sequential circulating port 2 is a Fabry-Perôt etalon 117 in accordance with this invention as is described heretofore. An output port of the etalon 117 is coupled to conventional filter means (not shown) for separating channels 2, 4, 6, and 8. Port 3 of circulator 82 is connected to a second etalon 117a having a same FSR but its output response shifted by d to ensure that channels 2, 4, 6, and 8 are fully removed. Further conventional filter means in the form of a plurality of dichroic filters 92 are provided for separating channels 1, 3, 5, and 7.

The operation of the sub-system of Fig. 8 is as follows. A light beam comprising channels 1, 2, 3, ... 8 corresponding to wavelengths centered at wavelengths λ1..λ8 is launched into the optical fibre 80 and enters port 1 of the optical circulator 82 exiting port 2 toward the first Fabry Perot etalon 117 at port 2. Light reflected from 117 propagates to port 3 of circulator 82 and then is passed to etalon 117a and is demultiplexed further with conventional WDM devices 92 and can optionally be amplified. Etalon 117 essentially reflects wavelengths of light λ1, λ3, λ5, and λ7 and transmits virtually all of wavelengths λ2, λ4, λ6, and λ8. It should be understood here that when wavelengths such as λ1, λ2, λ3, λ4.... are described, it is in fact a narrow predetermined band of wavelengths about these centre wavelengths, each band comprising a respective channel, that is being referred to. However, the reflection from etalon 117 contains slightly higher than acceptable levels of light of wavelengths λ2, λ4, λ6, and λ8. A second etalon 117a is required to remove remaining levels of light of wavelengths λ2, λ4, λ6, and λ8, to avoid interference with the signals of wavelengths λ1, λ3, λ5, and λ7.

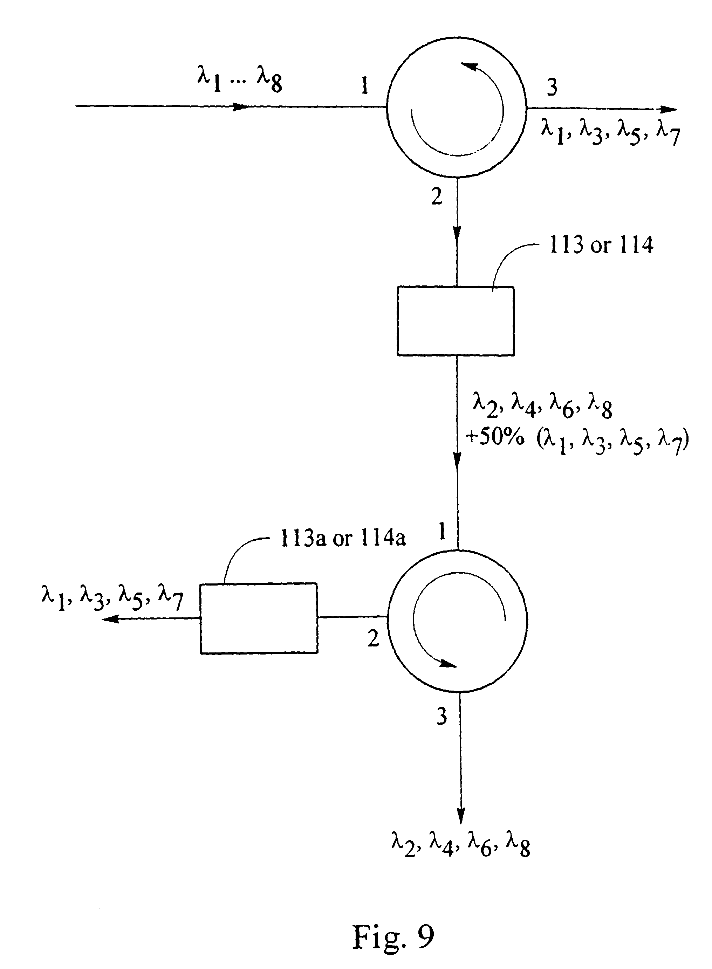

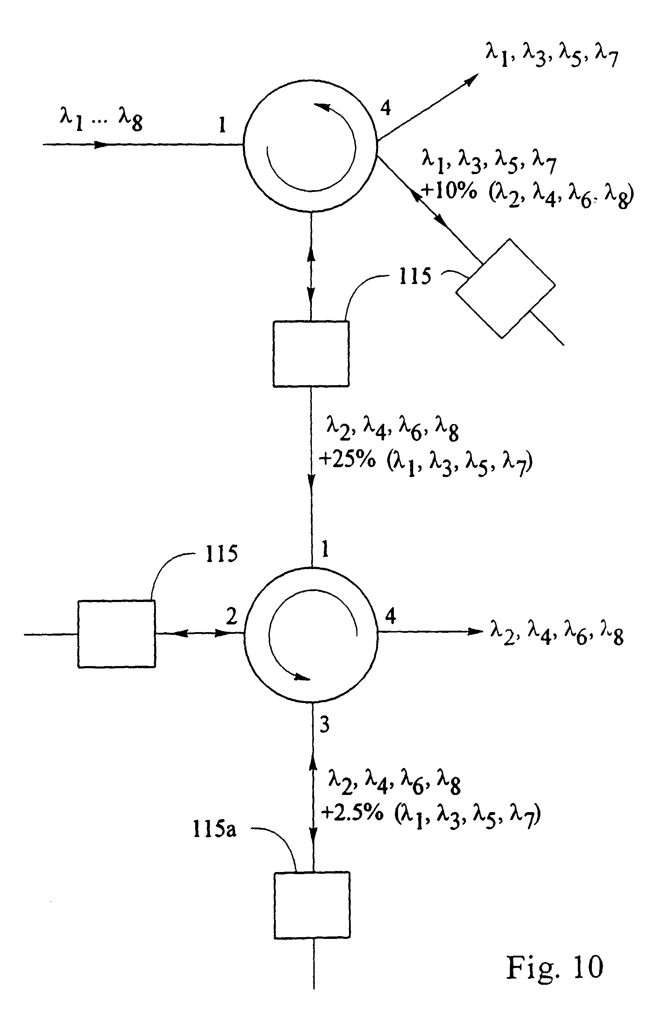

Fig 10 is similar to Fig. 9, except that two reflections from each etalon 115 are required in order to achieve sufficient isolation. To meet this end, 4-port circulators are used which replace the 3-port circulators described heretofore.

Fig. 11a shows a sub-system using a 50/50 splitter to divide the input optical signal between two optical fibers. In the upper optical fiber, two etalons 116 transmit only light of wavelengths λ2, λ4, λ6, and λ8. In the lower fiber, two etalons 116a transmit only λ1, λ3, λ5, and λ7.

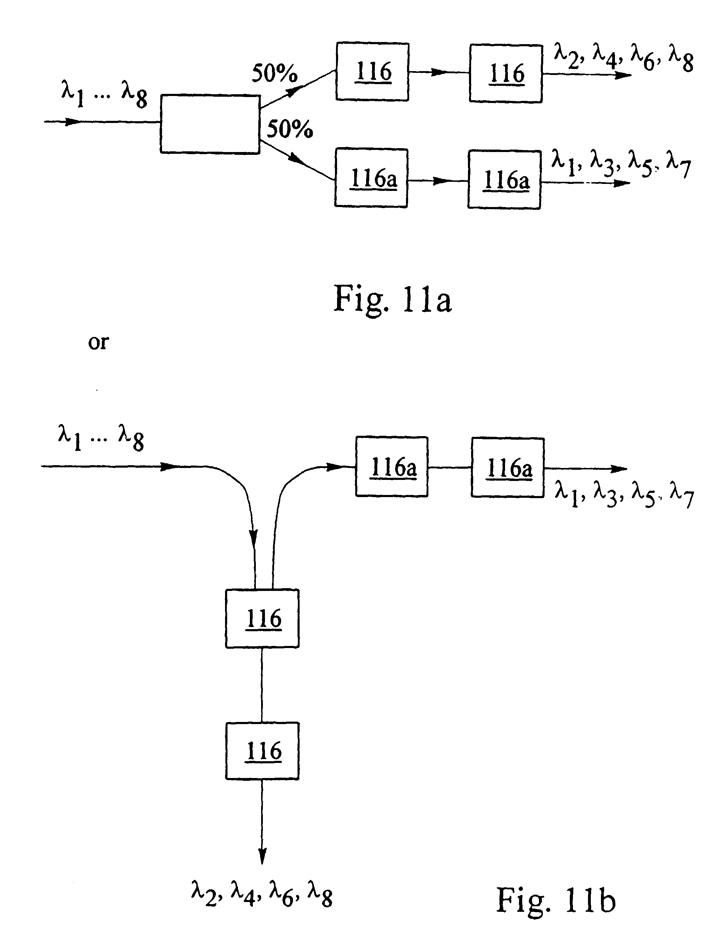

Fig. 11b shows another configuration where the reflected signal from 116 is used to obtain light corresponding to channels 1, through 7 having centre wavelengths λ1, λ3, λ5, and λ7 eliminating the 3 dB loss of the 50/50 splitter. As shown the reflected signal is captured in a separate optical fiber. Alternatively, an optical circulator may be used.

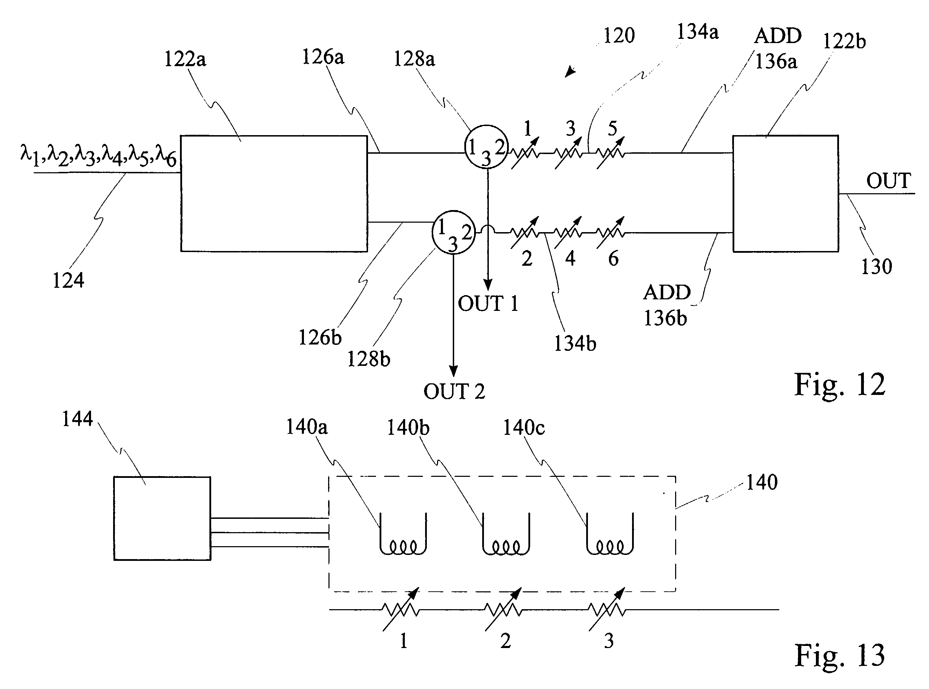

Referring now to Fig. 12, a configurable optical add-drop circuit is shown in accordance with this invention. The circuit 120 includes a first interleaver circuit 122a having an input waveguide 124 for receiving channels 1 through 6 having respective centre wavelengths λ1 through λ6. Output waveguide 126a receives channels 1, 3, and 5 for provision to a first optical circulator 128a and output waveguide 126b receives channels 2, 4, and 6 for provision to a second optical circulator 128b. The first circulator 128a is optically coupled with a second interleaver circuit 122b via a waveguide 134a having tunable Bragg gratings 1, 3, and 5 disposed therein for reflecting or passing any of channels 1, 3, or 5. The second circulator 128b is optically coupled with a second interleaver circuit 122b via a waveguide 134b having tunable Bragg gratings 2, 4, and 6 disposed therein for reflecting or passing any of channels 2, 4, or 6. Add ports 136a and 136b are optically coupled to waveguides 134a and 134b respectively for adding new signals into the circuit. Port 3 of each of the optical circulators 128a and 128b serves as an output port or "drop" port.

The circuit 120 operates in the following manner. A composite input signal is launched into waveguide 124 and the first interleaver circuit 122a demultiplexes/de-interleaves the composite signal into two data streams; a first data stream consisting of channels 1, 3, and 5 is directed onto waveguide 126a; and, a second data stream consisting of channels 2, 4, and 6 is directed onto waveguide 126b. The operation of the optical circulators and Bragg gratings is essentially the same, however the combination of first circulator 128a and gratings 1, 3, and 5 and associated control circuitry controls the flow and direction of channels 1, 3, and 5 wherein the combination of the second circulator 128b and the gratings 2, 4, and 6 and associated control circuitry controls the flow and direction of channels 2, 4, and 6. In operation, the data stream consisting of channels 1, 3 and 5 is received by a first port of the optical circulator 128a and is circulated to a second port where the signal is directed to the tunable Bragg gratings 1, 3, and 5. For example, when tunable Bragg grating 1 is tuned to reflect a centre wavelength λ1, wavelengths within the wavelength band of channel 1 are reflected backwards and re-enter port 2 of the circulator 128a and are circulated to port 3 of the same circulator. Port 3 serves as a drop port and channel 1 is dropped at the port labeled OUT1. In the instance that the gratings 3 and 5 are tuned to pass wavelengths centred at λ3 and λ5 respectively, channels 3 and 5 are passed through waveguide 134a and are directed into the interleaver circuit 130 which multiplexes all input signals into a single composite output signal on waveguide 130. Tunable Bragg gratings are well known, and can be tuned by various means. For example applying a heater to a grating will change its period and will alter its centre (reflective) wavelength. Alternatively, but less preferably, gratings can be tuned by stretching or compressing them. Advantageously, since the input signal comprising channels 1 through 6 is separated in such a manner as to have each adjacent wavelength routed to a different waveguide, the demultiplexed streams comprising channels 1, 3, and 5; and, channels 2, 4, and 6 require less precise gratings to further demultiplex these data streams. Since channel 2 has been removed in the data stream on waveguide 126a, there is space between channels 1 and 3 which allows "sloppy" less steep, and less costly filters to be used.

Waveguides 136a and 136b provide a means of launching new channels 1, 3, 5 or 2, 4, 6 respectively into the system. Alternatively other channels having other central wavelengths can be added via these waveguides. Thus, Fig. 12 illustrates that by launching a plurality of channelized wavelengths into the circuit 120, particular channels can be dropped, or added, or passed through. Control circuitry for controlling the centre wavelengths of the Bragg gratings is not shown in Fig 12 but is well known in the art.

Fig. 13 illustrates a block 140 having three heaters 140a through 140c which can be individually switched on, or off for controlling the gratings 1 through 3. Of course these heaters can be controlled by a suitably programmed microcontroller 144 having a digital to analog converter to supply or control the provision of suitable voltage or current to the heaters in a controlled manner. Furthermore, feedback circuitry can be utilized to achieve optimum control. The embodiment shown in Fig. 12 is exemplary and for ease of understanding is shown with few channels and single stage deinterleaveing; however, in a preferred embodiment wherein a 40 or more channel composite signal is launched into the system, multiple de-interleaving stages are preferred. For example, output one would have channels 1, 9, 17, 25 and output 2 would have channels 2, 10, 18, 26, etc. Thus the demultiplexing de-interleaver would separate the channels into 8 interleaved groups. Such a de-interleaver would have an FSR = 800 GHz wherein the 40 channels would have 100 GHz spacing such that 5 wavelengths would be separated by 800 GHz and would be present on each output port of the de-interleaver.

In the embodiment shown in Fig. 12, Bragg gratings 1, 3, and 5 are shown serially cascaded in waveguide 134a. However, in configurations where a greater number of Bragg gratings are serially cascaded, for example where gratings 1, 3, 5, 7, and 9 are serially disposed along an optical fibre, unwanted cladding modes from higher wavelength gratings, for example from gratings 7 and 9, in this instance, provide unwanted secondary reflections within lower channel wavebands. Stated more simply, secondary peak reflections from (for example) channels 7 and 9 "pollute" the spectrum of some of channels 1 through 5. This "pollution" or cross-talk is unwanted and compromises the integrity of the data streams. However, this unwanted effect can be lessened or obviated by first initiating band splitting, for example by providing a band splitting filter at a previous stage within the circuit before the Bragg gratings.

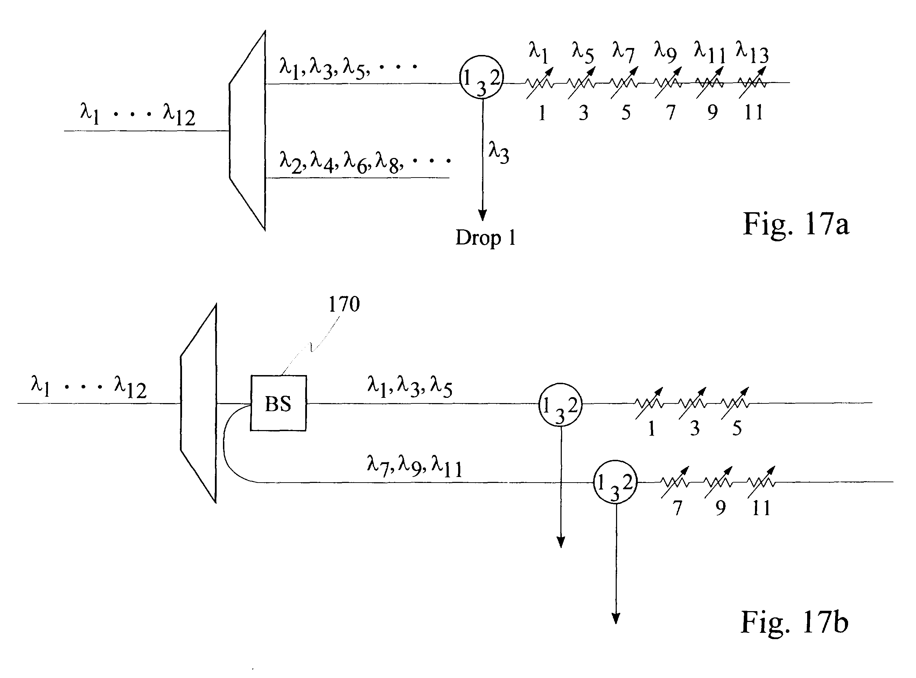

Isolation is provided by splitting the channels into groups of channels, i.e. 1, 3; and, 5, 7 prior to passing these signals to separate waveguides, a first having Bragg gratings 1, 3; and, a second having Bragg gratings 5, 7. This is illustrated for a 12 channel system in Fig. 17b where band splitting is performed by a band splitting filter 170 which separates the band into a set of lower wavelengths λ1, λ3, λ5 and a set of higher wavelengths λ7, λ9, λ11. Fig. 17a illustrates a typical system in accordance with this invention where pre-band splitting is not performed.

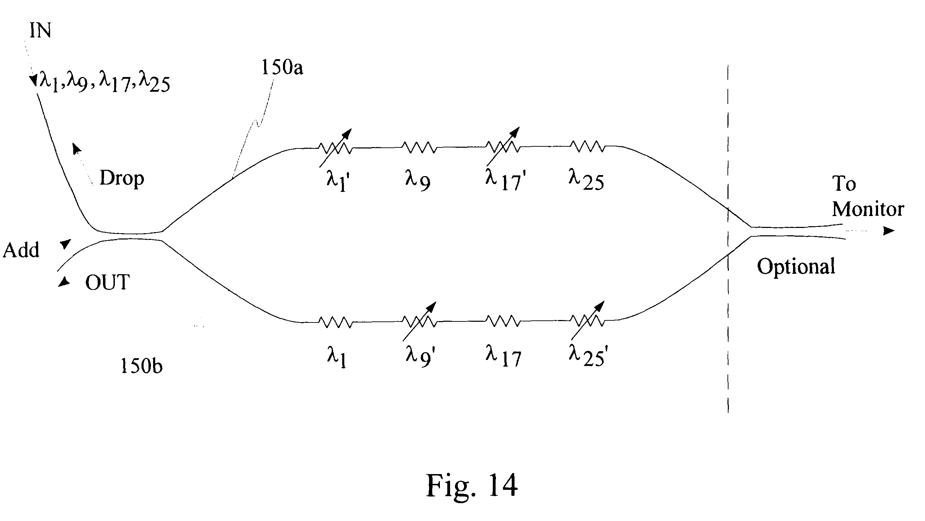

An alternative embodiment of this invention that will be described is provided wherein four blocks in the form of integrated chips are coupled together to provide the functionality of the circuit shown in Fig. 12. One aspect of this alternative embodiment concerns a waveguide chip, which replaces a portion of the discrete components shown in Fig. 12. For example, optical fibres 134a and 134b including the add ports 136a and 136b can be replaced by the integrated circuit of Fig. 14.

Referring now to Fig. 14 a plurality of Mach Zendher (MZ) inerferometers are provided (although only one is shown) within a discrete waveguide chip having a polymer light guiding layer. Within each MZ arm 150a and 150b are four Bragg gratings. The gratings in pairs of arms 150a and 150b are arranged such that one grating of a pair of is fixed, having a fixed centre wavelength and its complementary grating in the other arm is tunable having a same or similar centre wavelength. Thus as is shown, grating λ1 which is fixed has a corresponding tunable grating λ1', and grating λ2 which is fixed has a corresponding tunable grating λ2'. Each of the tunable gratings are slightly chirped, to provide a means of varying the phase relationship between light corresponding to same channels 1, 9, 17 or 25 on opposite arms of the first MZ. By independently tuning the tunable gratings, light corresponding to channels 1, 9, 17 or 25 can be directed to the drop port, the transmit port or both. Optionally, the gratings can be tuned to allow channels to pass through to a monitoring port. Due to the high thermo-optic effect of the polymer waveguide material, and the high refractive index change with variation in temperature, other embodiments are practicable wherein one tunable grating is used and adjusted to selectively reflect any one of a plurality of optical channels. This is particularly applicable in the architecture of Fig. 12 wherein all of the gratings are tunable and serially cascaded.

In operation the circuit of Fig. 14 accepts four light channels 1, 9, 17 and 25 that have been demultiplexed or de-interleaved and selectively directs all or some of those channels to an OUT port to be transmitted onward to a second interleaver or multiplexor. In another mode of operation, and in dependence upon the state of the tunable Bragg gratings, individual channels can be directed to be passed out of the drop (IN) port. Through the application of heat or cooling, the effective reflective wavelength of a particular grating is changed and a phase shift between same wavelength signals on two arms can be achieved. The presence or absence of a suitable phase shift is used to direct the signal in a preferred direction. New signals can conveniently be launched into the Add (OUT) port.

Turning now to Fig. 15, a waveguide chip is shown having channels corresponding to centre wavelengths λ1, λ9, λ17 and λ25 launched into a first input port. Channels corresponding to centre wavelengths λ2, λ10, λ18 and λ26 are launched into a second input port, and so on. Thus, an array of 8 or 16 waveguides (as may be the case) receives the tapped signals from the waveguide chip, a portion of which is shown in Fig. 14. Each waveguide is split in 4 ways and a cascade of three Bragg gratings is disposed in each arm. The grating lengths and periods are chosen such that all but one wavelength/channel is blocked. For example, on the uppermost arm 155, gratings 157a, 157b, and 157c are selected to reflect light corresponding to channels 9, 17, and 25 respectively, and to pass light corresponding to channel 1. On the next arm gratings 157b, 157c, and 157d are selected to reflect light corresponding to channels 17, 25, and 1 respectively, and to pass light corresponding to channel 9. On the third arm gratings 157a, 157c, and 157d are selected to reflect light corresponding to channels 9, 25, and 1 respectively, and to pass light corresponding to channel 17, and on the last arm gratings 157a, 157b, and 157d are selected to reflect light corresponding to channels 9, 17, and 1 respectively, and to pass light corresponding to channel 25. Of course, the waveguide chip shown can be used with any de-interleaver circuit whereby separate streams of interleaved data are provided to the input ports of the chip. Furthermore, the waveguide chip is not limited to having three input ports.

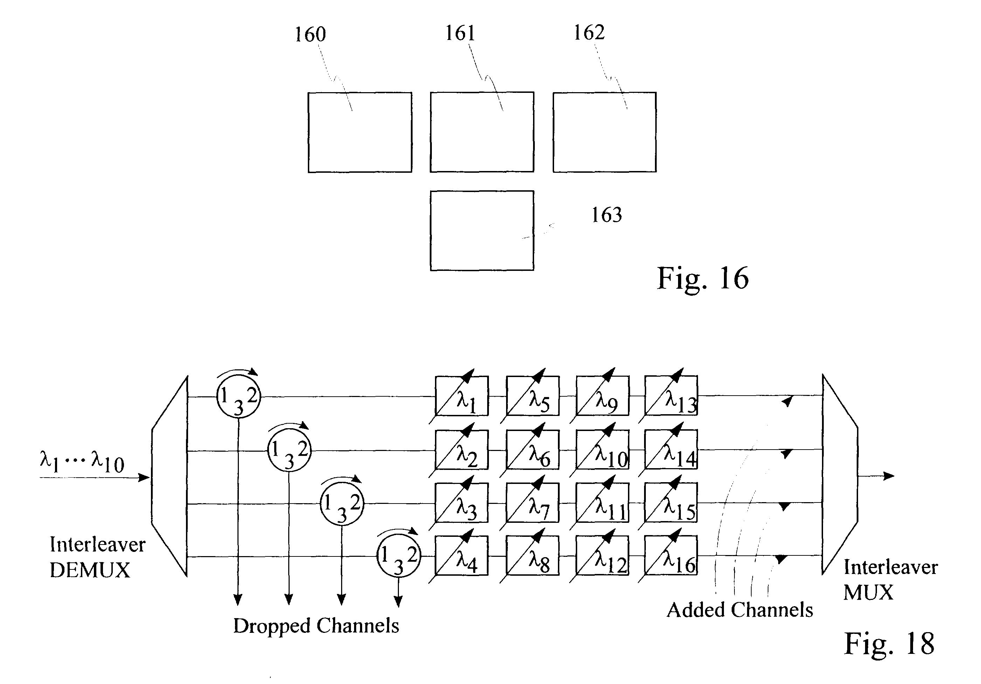

In a preferred embodiment of the invention shown in Fig 16, four waveguide chips are interconnected with ribbon fibres (not shown) in such a manner as to provide an integrated device for adding and/or dropping and monitoring channels from a composite optical signal. A first interleaver circuit 160 formed of an arrayed waveguide grating (AWG) is provided for demultiplexing the composite multichannel signals into spaced channels in a manner as is taught heretofore. A second chip 161 , a portion of which is shown in more detail in Fig. 14 is provided for adding channels to, dropping selected channels from and routing the channels to a second interleaver circuit 162. Coupled to the second chip 161 is control circuitry for controlling the heaters and hence the relative phase of respective channels to direct particular channels in a particular direction in a controlled manner. A monitor chip 163 shown in more detail in Fig. 15 is provided for monitoring each channel.

Fig. 18 is a schematic diagram of a configurable add drop demultiplexing circuit for a 16 channel signal similar to the one shown in Fig. 12.

Of course numerous other embodiments can be envisaged without departing from the spirit and scope of the invention.

## Claims

1. A configurable optical system comprising:
a first de-interleaver/interleaver demultiplexing/multiplexing circuit, having at least an input port for receiving an optical signal having a plurality of multiplexed channels of light, and having a plurality of output ports for receiving demultiplexed channels of light;
a second interleaver multiplexing/demultiplexing circuit optically coupled with the first interleaver demultiplexing /multiplexing circuit and having a plurality of light receiving ports and at least an output port for receiving a multiplexed optical signal, and;
a controller for dynamically controlling the direction of at least one wavelength band of light propagating between the first and second interleaver circuits in dependence upon at least a control signal.

2. A configurable optical system as defined in claim 2 further comprising an optical circulator optically coupled to at least one of the two interleaver circuits for directing optical signals from and, or to one or both of the interleaver circuits.

3. A configurable optical system as defined in claim 1 further comprising means for coupling light into a waveguide between the first interleaver circuit and the second interleaver circuit.

4. A configurable optical system as defined in claim 1 further comprising at least an additional port optically coupled to one of the first and the second interleaver circuits coupling light into a waveguide between the first interleaver circuit and the second interleaver circuit.

5. A configurable optical system as defined in claim 1 further comprising a plurality of Bragg gratings disposed between the first and second interleaver circuits for reflecting or passing channels of light in dependence upon a wavelength band of a particular channel.

6. A configurable optical system as defined in claim 4 further comprising a plurality of Bragg gratings disposed between the first and second interleaver circuits for reflecting or passing channels of light in dependence upon a wavelength band of a particular channel.

7. A configurable optical system as defined in claim 5 wherein at least some of the Bragg gratings are tunable.

8. A configurable optical system as defined in claim 7 wherein the tunable Bragg gratings are responsive to control signals provided by the controller.

9. A configurable optical system comprising:
a first interleaver demultiplexing /multiplexing circuit having at least an input port for receiving an optical signal having a plurality of multiplexed channels of light, and having a plurality of output ports for receiving demultiplexed channels of light;
a second interleaver multiplexing/demultiplexing circuit optically coupled with the first interleaver demultiplexing /multiplexing circuit and having a plurality of light receiving ports and at least an output port for receiving a multiplexed optical signal, and;
direction control circuitry for directing at least one wavelength band of light propagating between the first and second interleaver circuits in dependence upon at least a control signal.

10. An integrated reconfigurable add and / or drop optical system comprising:
a first integrated waveguide block having integrated waveguides therein, said first block for providing a plurality of de-interleaved channels at a plurality of ports;
a second integrated waveguide block optically coupled with the plurality of ports of the first integrated waveguide block, the second block having a plurality of tunable gratings therein for directing particular channels towards an output port or towards a drop port;
a third integrated waveguide block having integrated waveguides therein, said third block for receiving at least some of the de-interleaved channels and for interleaving and directing said channels to the output port.

11. An integrated reconfigurable add and / or drop optical system as defined in claim 10 further comprising a monitoring waveguide block having a having a plurality of gratings therein for receiving a portion of the signal energy from the de-interleaved channels and for providing demultiplexing of said channels.

12. An integrated reconfigurable add and / or drop optical system as defined in claim 1 further comprising a monitoring waveguide block having a having a plurality of gratings therein for receiving a portion of the signal energy from the de-interleaved channels and for providing demultiplexing of said channels.
